# EUROPÄISCHE PATENTSCHRIFT

(11) **EP 2 435 186 B1**
(45) Veröffentlichungstag und Bekanntmachung des Hinweises auf die Patenterteilung: **08.08.2018**
(21) Anmeldenummer: 10719934.1
(22) Anmeldetag: 29.04.2010
(51) Int. Cl.: B01L 3/00, G01N 35/10, F16K 99/00

(54) **VORRICHTUNG ZUM STEUERN VON FLUIDSTRÖMEN IN LAB-ON-A-CHIP-SYSTEMEN**
DEVICE FOR CONTROLLING FLUID FLOWS IN LAB-ON-A-CHIP SYSTEMS
DISPOSITIF DESTINÉ À GUIDER DES ÉCOULEMENTS DE FLUIDE DANS DES SYSTÈMES DE LABORATOIRE SUR PUCE

(30) Priorität: 29.05.2009 DE 102009023430
(43) Veröffentlichungstag der Anmeldung: 04.04.2012
(73) Patentinhaber: Boehringer Ingelheim Vetmedica GmbH, 55216 Ingelheim am Rhein (DE)
(72) Erfinder: GUMBRECHT, Walter, 91074 Herzogenaurach (DE); FRIEDRICH, Katja, 90425 Nürnberg (DE); PAULICKA, Peter, 91341 Röttenbach (DE)
(74) Vertreter: Von Rohr Patentanwälte Partnerschaft mbB
(86) Internationale Anmeldenummer: PCT/EP2010/055817
(87) Internationale Veröffentlichungsnummer: WO 2010/136298

(56) Entgegenhaltungen:
- EP-A1- 0 002 173
- DE-A1- 2 107 437
- GB-A- 1 243 435
- US-A- 4 006 753
- US-A- 5 927 332

## Beschreibung

Die vorliegende Erfindung bezieht sich auf eine Vorrichtung zum Steuern von Fluidströmen in Lab-on-a-Chip-Systemen, mit einem Array von Ventilen. Die Ventile sind in n Spalten Sₙ und m Zeilen Zₘ angeordnet, wobei n und m ganze Zahlen sind. Sie sind jeweils ausgelegt, einen Fluidstrom in einem zugehörigen Durchflusskanal zu steuern. Ferner weist die Vorrichtung eine Einrichtung zum Betätigen der Ventile auf. Eine Vorrichtung mit den zuvor beschriebenen Merkmalen ist beispielsweise aus der EP 0 180 064 B1 bekannt. Die Erfindung betrifft außerdem Verfahren zum Steuern von Fluidströmen in solchen Lab-ona-Chip-Systemen und Verfahren zum Herstellen der Vorrichtung.

In der Biosensorik werden Lab-on-a-Chip-Systeme eingesetzt, um parallel biochemische Analysen durchführen zu können. Auf einem Träger, welcher zum Beispiel aus einer Plastikkarte besteht, sind mikrofluidische Einrichtungen und ein Chip mit einem Array von Sensoren integriert. Das Array von Sensoren besteht zum Beispiel aus elektrochemischen Sensoren, welche in Spalten und Zeilen auf dem Chip angeordnet sind. Die Sensoren sind mit Molekülen beschichtet, an welchen die nachzuweisenden Substanzen spezifisch binden. Das spezifische Binden wird elektrochemisch über Änderungen von Strom und/oder Spannung nachgewiesen. Damit lassen sich in zu untersuchenden Lösungen, wie zum Beispiel Blut oder Urin, biochemische Substanzen nachweisen, wie z.B. Antikörper, Peptide oder DNA.

Die gemessenen elektrochemischen Signale können durch integrierte Schaltungen auf dem Chip direkt verarbeitet werden, oder sie können über eine externe Auswerteeinheit aus dem Chip ausgelesen werden. Die für die Untersuchung notwendigen Chemikalien können von der externen Auswerteeinheit dem Träger zugeführt werden oder sich auf dem Träger zugeführt werden oder sich auf dem Träger, zum Beispiel in Form von Trockenreagenzien, schon befinden. Bei der Untersuchung werden die Lösungen, d.h. Flüssigkeiten, dem Träger zugeführt und auf dem Träger über Mikrokanäle in eine Reaktionskammer geleitet. In der Reaktionskammer befindet sich der Chip mit dem Sensor Array. Für den Nachweis notwendige Reaktionen können in den Mikrokanälen und/oder der Reaktionskammer stattfinden.

Bei komplexen biochemischen Reaktionen, welche für den Nachweis notwendig sind, muss der Flüssigkeitsstrom der Lösung kontrolliert werden. So kann es notwendig sein, dass in einem Bereich der Mikrokanäle die Flüssigkeit für einen vorbestimmten Zeitraum gestaut wird, damit z.B. Trockenreagenzien, welche in diesem Bereich gelagert sind, gelöst werden und chemische Reaktionen stattfinden können. Erst nach Vollendung der chemischen Reaktionen wird die Flüssigkeit in dem Mikrokanal weitergeleitet. Des Weiteren kann es notwendig sein, beim Nachweis der biochemischen Substanzen in der Reaktionskammer die Reaktionskammer flüssigkeitsdicht zu verschließen. Zu diesem Zweck sind im Träger Ventile vorzusehen. Diese sind an bestimmten ausgewählten Stellen, wie z.B. im Zu- und Abfluss der Reaktionskammer, im Träger anzuordnen.

Aus der EP 0 180 064 B1 ist ein Ventil-Array aus Ventilen bekannt, welche ausgebildete sind, Mikrokanäle zu verschließen. Die Mikrokanäle sind in einem ersten Träger angeordnet, welcher auf der Seite der Mikrokanäle mit einer dünnen Membran abgedeckt ist. Die dünne Membran ist sandwichmäßig zwischen dem ersten Träger und einem zweiten Träger angeordnet. In dem zweiten Träger sind stempelähnliche Einrichtungen angeordnet, welche mit Hilfe von Federn über die Membran auf Öffnungen der Mikrokanäle in dem ersten Träger gepresst werden können. Dabei werden die Mikrokanäle durch die Membran verschlossen. Die beschriebenen Ventile sind entsprechend der Lage der Durchflusskanäle auf dem Träger angeordnet. Sie werden einzeln und getrennt voneinander angesteuert.

Bei komplexen Analyseprozessen ist es zwingend notwendig, mehrere chemische Prozesse getrennt voneinander gleichzeitig auf einer Chip-Karte durchzuführen. Dazu müssen mehrere Ventile eines Arrays von Ventilen auf der Chip-Karte gleichzeitig betätigt werden. Systeme im Stand der Technik, wie z.B. in der EP 0 180 064 B1 beschrieben, steuern getrennt voneinander die Ventile einzeln an, was sehr aufwendig ist und zu hohen Kosten führt.

Die US 4,006,753 A offenbart ein Ventilsystem zur Steuerung eines Fluidstroms. Das Ventilsystem wird zur Zuführung von Drucktinte an eine zugeordnete Druckvorrichtung eingesetzt. Das Ventilsystem umfasst einen zylindrischen Ventilkörper in dem Ventilstempel angeordnet sind. In dem Ventilkörper ist eine elastische Membran eingespannt, an der ein Durchflusskanal angrenzt. Die Membran ist zum Absperren des Durchflusskanals mittels der Ventilstempel betätigbar.

Die DE 2 107 437 A umfasst ein Ventilsystem, das einen Kopf und einen Block aufweist. Zwischen dem Kopf und dem Block ist eine verformbare Membran eingeklemmt. In dem Kopf sind eine Reihe von Einlass- bzw. Auslasskanäle angeordnet. Innerhalb des Kopfes sind Kolben vorgesehen, die zum Absperren der Kanäle mechanisch auf die Membran einwirken.

Die US 5,927,332 A betrifft eine Mischbatterie für eine Dusche. Die Mischbatterie weist eine flexible Membran auf, die zwischen zwei Klemmplatten eingespannt ist. In einer Klemmplatte sind Kolben verschieblich gelagert, die auf die Membran derart einwirken, dass wahlweise Kalt- oder Warmwasser einem Durchflusskanal zugeführt wird.

Die EP 0 002 173 A1 betrifft ein Membranventil mit einem Grundkörper, in dem oberseitig Durchflusskanäle eingeformt sind. Die Kanäle werden von einer elastischen Membran abgedeckt, die zwischen dem Grundkörper und einem Gegenkörper eingeklemmt ist. In dem Grundkörper ist ein Stempel verschiebbar geführt, mit dessen Hilfe die Membran zum Absperren des zugeordneten Durchflusskanals in den Kanal eindrückbar ist.

Aufgabe der vorliegenden Erfindung ist es deshalb, eine Vorrichtung zum Nachweis biochemischer Substanzen mit einem Array von Ventilen anzugeben, bei welcher sich die Ventile mit einem einfachen, kostengünstigen Aufbau gleichzeitig steuern lassen und eine zuverlässige Funktionsweise erwünscht wird.

Die angegebene Aufgabe wird bezüglich der Vorrichtung zum Steuern von Fluidströmen in Lab-on-a-Chip-Systemen mit den Merkmalen des Anspruchs 1 gelöst.

Vorteilhafte Ausgestaltungen der erfindungsgemäßen Vorrichtung zum Steuern von Fluidströmen in Lab-on-a-Chip-Systemen gehen aus den jeweils zugeordneten abhängigen Unteransprüchen hervor. Dabei können die Merkmale des Hauptanspruchs mit Merkmalen der Unteransprüche und Merkmale der Unteransprüche untereinander kombiniert werden.

Die erfindungsgemäße Vorrichtung zum Steuern von Fluidströmen in Lab-on-a-Chip-Systemen weist ein Array von Ventilen auf, wobei die Ventile in n Spalten Sₙ und m Zeilen Zₘ angeordnet sind. Dabei sind n und m ganze Zahlen. Das Array umfasst mindestens zwei Ventile, wobei jede Spalte Sₙ kein Ventil oder höchstens ein Ventil aufweist und jede Zeile Zₘ zwischen Null und n Ventilen aufweist. Die Ventile sind jeweils ausgelegt, einen Fluidstrom in einem zugehörigen Durchflusskanal zu steuern. Weiterhin weist die Vorrichtung eine Einrichtung zum Betätigen der Ventile auf.

Die spezielle Anordnung der Ventile im Array macht eine einfache Steuerung möglich. Es befindet sich in jeder Spalte nur ein Ventil. Durch beliebig viele Ventile in den Zeilen ist aber jede notwendige Ventilanordnung realisierbar, da die Zahl der Spalten und die Zahl der Zeilen frei wählbar sind. Je nach Anforderung der zu steuernden chemischen Prozesse und damit der Fluidik bei einer Analyse bzw. Untersuchung und des zeitlichen Ablaufs der Prozesse, insbesondere von gleichzeitig stattfindenden Prozessen an unterschiedlichen Orten, kann das Array von Ventilen designed werden. Die fluidischen Kanäle und Kammern werden entsprechend dem Design des Arrays von Ventilen angeordnet. Die Anordnung der Ventile in Array-Form macht eine besonders einfache und für viele Prozesse anpassbare oder reproduzierbare Herstellung der Vorrichtung mit einfachen Mitteln möglich.

Die Einrichtung zum Steuern der Ventile kann eine im Wesentlichen ebene Platte aufweisen, mit aus der Ebene herausragenden Erhöhungen, welche in n' Spalten S_{n'} und m' Zeilen Z_{m'} angeordnet sind. Dabei können die Abstände benachbarter Spalten S_{n'} gleich den Abständen zugeordneter benachbarter Spalten Sₙ der Ventile sein.

Die Einrichtung zum Steuern der Ventile macht eine mechanische Steuerung aller Ventile gleichzeitig nach einem festen Programm möglich. Ihr Aufbau in n' Spalten S_{n'} und m' Zeilen Z_{m'} macht sie kompatibel mit dem Array von Ventilen.

Durch eine bewegbare Lagerung der im Wesentlichen ebene Platte in einer ersten Richtung gegenüber dem Array von Ventilen, wobei die erste Richtung parallel zu den Spalten Sₙ des Arrays von Ventilen verläuft, können durch Bewegung der im Wesentlichen ebene Platte Ventile gesteuert werden. Die aus der Ebene der Platte herausragenden Erhöhungen können dabei zum einen derart in n' Spalten S_{n'} und m' Zeilen Z_{m'} angeordnet sein, dass bei einer Bewegung der im Wesentlichen ebene Platte entlang der ersten Richtung gegenüber dem Array von Ventilen nach einem vorgegebenen Programm gesteuert einzelne Ventile geschlossen oder geöffnet sind.

Da in jeder Spalte Sₙ des Arrays von Ventilen nur ein Ventil angeordnet ist, steuert eine Erhöhung in der im Wesentlichen ebenen Platte, bei Bewegung der Platte entlang der Spalte, nur dieses eine Ventil. Abhängig vom Abstand und der Zahl der Erhöhungen kann das eine Ventil geöffnet und geschlossen werden. Mehrere Erhöhungen in einer Zeile führen zu einem gleichzeitigen Betätigen von in einer Zeile angeordneten Ventilen. Die Anordnung der Ventile und der Erhöhungen bestimmt somit das Programm, nach welchem die Ventile gesteuert werden. Bei vorgegebener Anordnung der Ventile im Array kann das Programm durch Anordnung der Erhöhungen bestimmt werden.

Das Array von Ventilen kann in einer Chip-Karte angeordnet sein, wobei die Chip-Karte einen flachen Körper aus einem Plastikmaterial in Kreditkartenform umfassen kann, auf dessen einer Vorderseite eine Folie, insbesondere eine selbstklebende Folie aufgebracht ist. In dem Körper können auf der Oberfläche der Vorderseite Durchflusskanäle als Ausnehmungen angeordnet sein sowie die Ventile, die eine Elastomermasse enthalten, die zumindest teilweise benachbart zu einem jeweils zugeordneten Durchflusskanalangeordnet ist. Dadurch ergibt sich ein besonders einfacher und kostengünstig herzustellender Aufbau des Arrays von Ventilen. Chip-Karten sind zumal in der Biosensorik gebräuchlich und können somit in Standardeinrichtungen verwendet werden. Dies senkt ebenfalls Kosten, weil keine vollkommen neunen Konzepte der Analyseeinrichtungen entwickelt werden müssen.

Dabei kann der Plastik-Körper aus Polycarbonat oder Polypropylen bestehen. Das Elastomer kann ein thermoplastisches Elastomer, insbesondere Gummi oder ein Gemisch aus Polypropylen und Ethylen-Propylen-Dien-M-Klass-Elastomer sein. Diese Materialien sind einfach zu verarbeiten und kostengünstig. Sie sind auch inert gegenüber den meisten in der Biosensorik verwendeten Chemikalien. Des Weiteren reagieren diese Materialien nicht bzw. nur in geringem Umfang mit den zu analysierenden Substanzen. Änderungen der Faltung der Substanzen bzw. Moleküle oder andere Reaktionen, welche die Untersuchung verfälschen, finden durch diese Materialien in der Regel nicht statt.

Die Chip-Karte kann sandwichartig in der Einrichtung zum Betätigen der Ventile angeordnet sein. Auf einer Rückseite der Chip-Karte kann zu jedem Ventil jeweils in einer Einrichtungsplatte ein Stempel zum Betätigen des jeweiligen Ventils angeordnet sein, wobei der Stempel über wenigstens eine Feder zwischen der Einrichtungsplatte und dem Stempel so vorgespannt ist, dass im Wesentlichen keine Druckkraft zwischen Stempel und Ventil besteht. Dadurch ist der mechanisch aufwändigere und somit kostenintensivere Teil in der Einrichtung zum Betätigen der Ventile untergebracht. Bei einer einmal zu verwendenden Wegwerfeinrichtung Chip-Karte können so billige Materialien ohne aufwändigen Produktionsprozess verwendet werden.

Das sandwichartige Anordnen der Chip-Karte in der Einrichtung zum Betätigen der Ventile führt zu einer sicheren, ortsfesten Lagerung, wodurch kein Verrutschen der Chip-Karte gegenüber der Einrichtung auftritt. Dadurch ist zu jeder Zeit gewährleistet, dass die Stempel zuverlässig das zugeordnete Ventil betätigen können. Eine zuverlässige Funktionsweise wird dadurch gewährleistet.

Ein erfindungsgemäßes Verfahren zum Steuern einer zuvor beschriebenen Vorrichtung umfasst, dass die Ventile jeweils durch Beaufschlagen mit einer Druckkraft auf das jeweilige Ventil, welche insbesondere über wenigstens den einen Stempel ausgeübt wird, betätigt werden. Ohne Beaufschlagung mit Druckkraft wird ein Ventil geöffnet und in einem zugeordneten Durchflusskanal strömt ein Fluid und bei Beaufschlagung des Ventils mit Druckkraft wird das Ventil geschlossen und im zugeordneten Durchflusskanal wird die Fluidströmung unterbunden.

Dieses Verfahren ist besonders einfach und steuert die Fluidströmung effektiv. Wichtig ist dabei, dass ein gas- und/oder flüssigkeitsdichtes Schließen des Ventils gewährleistet ist. Durch das Auslösen über Druckkraft ist ein einfacher Aufbau des Ventils und der Auslösemimik möglich. Eine zuverlässige Funktionsweise ohne Ermüdung der Materialien ist auch bei häufigen Öffnen und Schließen machbar.

Das Öffnen und Schließen der Ventile kann nach einem vorbestimmten Programm erfolgen, indem die im Wesentlichen ebene Platte parallel zu den Spalten Sₙ gegenüber dem Array von Ventilen bewegt wird.

Es ist keine elektrische Programmierung oder ein aufwendiger Regel- und Steuerkreislauf notwendig. Bei häufig ausgeführten, immer gleichen Analyseprogramm führt dies zu einem einfachen, zuverlässigen und kostengünstigen Aufbau und Verfahren. Das Steuern der Ventile kann ausschließlich mechanisch erfolgen, durch eine Bewegung der im Wesentlichen ebenen Platte. Gerade in Verbindung mit einem Händeln von Flüssigkeiten und der Umgebung in Laboren führt dies zu einer höheren Zuverlässigkeit der Untersuchung wegen geringerer Störanfälligkeit verglichen mit aufwendigen Steuerelektroniken.

Die Differenz aus den m' Zeilen Z_{m'} der Einrichtung zum Steuern der Ventile und den m Zeilen Zₘ des Arrays von Ventilen kann die Anzahl der Prozessschritte ergeben, bei welchen wenigstens ein Ventil betätigt wird.

Ein Prozess mit Steuerung der Ventile kann zum einen durchgeführt werden, indem die im Wesentlichen ebene Platte relativ zum Array von Ventilen mit fester Geschwindigkeit bewegt wird, wobei die Dauer eines Prozessschrittes durch den Abstand der Zeilen Z_{m'} jeweils voneinander bestimmt wird, bei gleichem Abstand aller Zeilen Zₘ jeweils voneinander, oder wobei die Dauer eines Prozessschrittes durch den Abstand der Zeilen Zₘ jeweils voneinander bestimmt wird, bei gleichem Abstand aller Zeilen Z_{m'} jeweils voneinander.

Eine im Wesentlichen ebene Platte ist mit konstanter Geschwindigkeit einfacher und mit weniger Aufwand zuverlässig zu betreiben, als mit beschleunigten Geschwindigkeiten. Antriebe mit konstanter Geschwindigkeit sind kostengünstig und zuverlässig. Die Dauer der Prozessschritte durch den Abstand der Zeilen zu bestimmen führt zu einer hohen Reproduzierbarkeit und Zuverlässigkeit der Untersuchung.

Ein Prozess mit Steuerung der Ventile kann zum anderen aber auch durchgeführt werden, indem die im Wesentlichen ebene Platte relativ zum Array von Ventilen mit einer Geschwindigkeit bewegt wird, welche jeweils der Dauer eines Prozessschrittes angepasst ist, wobei die Zeilen Zₘ jeweils voneinander und die Zeilen Z_{m'} jeweils voneinander gleich beabstandet angeordnet werden.

Gleiche Abstände der Zeilen voneinander vereinfacht den Aufbau und die Herstellung der Vorrichtung. Jedoch ist der Aufwand für den Antrieb der im Wesentlichen ebenen Platte bei beschleunigten Bewegungen höher.

Ein Verfahren zum Herstellen einer zuvor beschriebenen Vorrichtung umfasst, dass abhängig von der Anordnung der Ventile des Arrays in den n Spalten Sₙ und m Zeilen Zₘ Durchflusskanäle in der Vorrichtung vorgesehen werden. Dies ermöglicht ein Design der Vorrichtung abhängig von den Ventilen. Ausgehend von den aufwendiger zu produzierenden Ventilen werden dann darauffolgend die Durchflusskanäle und Reaktionskammern angeordnet bzw. designed. Ein Array von Ventilen kann so mit immer gleicher Array-Form einfach und kostengünstig durch die Wiederverwertung der Form produziert werden, wobei nur festgelegt wird, an welchen Stellen des Arrays Ventile eingebracht oder nicht eingebracht werden. Die billiger und einfacher zu produzierenden Kanäle und Kammern werden dann abhängig von den Ventilen und den durchzuführenden Reaktionen und der gewünschten Fluidik festgelegt und hergestellt. Vorteile in den Kosten des Designs und der Herstellung sind so analog der Halbleiterelektronik zu realisieren. Dort werden Bauelemente entsprechend der Aufgabe einer Schaltung und der Produktionstechnik auf einem Chip angeordnet, und die Verschaltung entsprechend der Lage der Bauelemente designed und realisiert. Die Bauelemente werden so miteinander durch die Verschaltung elektrisch verbunden, dass die gewünschte elektrische Schaltung erhalten wird.

Die mit dem Verfahren zum Steuern einer Vorrichtung und mit dem Verfahren zum Herstellen einer Vorrichtung verbundenen Vorteile sind analog den Vorteilen, welche zuvor im Bezug auf die Vorrichtung zum Steuern von Fluidströmen in Lab-on-a-Chip-Systemen beschrieben wurden.

Bevorzugte Ausführungsformen der Erfindung mit vorteilhaften Weiterbildungen gemäß den Merkmalen der abhängigen Ansprüche werden nachfolgend anhand der Figuren näher erläutert, ohne jedoch darauf beschränkt zu sein.

Es wird in den Figuren dargestellt:
- Fig. 1: eine schematische Schnittdarstellung des Aufbaus eines Ventils, und
- Fig. 2: eine erfindungsgemäße Vorrichtung zum Steuern von Fluidströmen in Lab-on-a-Chip-Systemen in Aufsicht und in Schnittdarstellung entlang der Schnittlinie A-A' und entlang der Schnittlinie B-B' mit einer Einrichtung zum Steuern der Ventile.

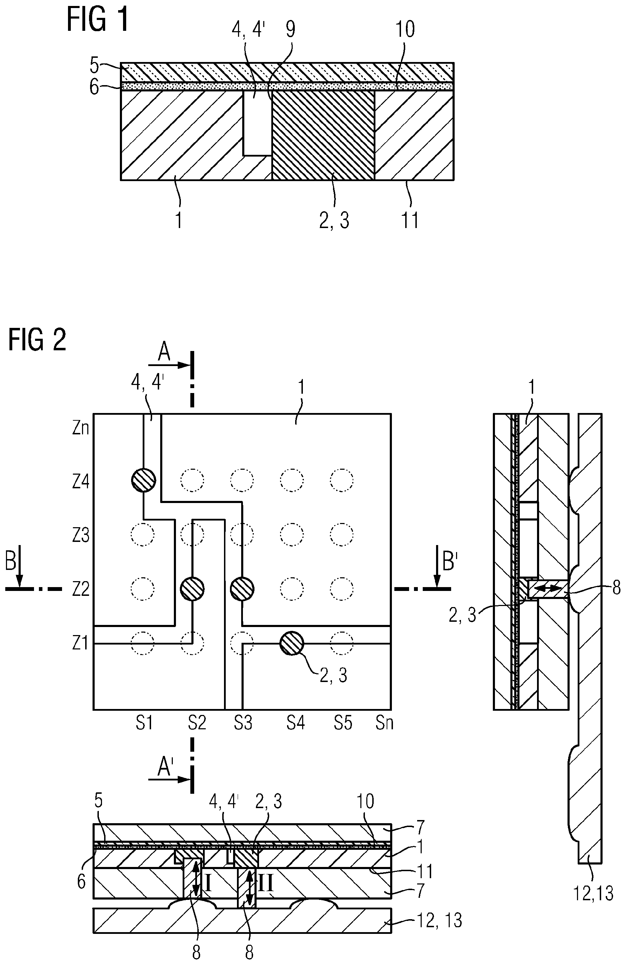

In der Fig. 1 ist beispielhaft, zum besseren Verständnis der Einrichtung zum Steuern von Fluidströmen, ein Ventil gezeigt. Das Ventil ist aus einem Körper 1 aus einem Plastikmaterial und einer Elastomermasse 2 aufgebaut. Der Körper 1 stellt einen Träger bzw. ein Substrat dar und kann die Form einer Chip-Karte aufweisen, wobei auf dem eingebetteten Chip ein elektrochemisches Sensor-Array zum Nachweis biochemischer Substanzen angeordnet ist. Der Einfachheit halber soll hier auf die Ausgestaltung der Chip-Karte nicht näher eingegangen werden. Es sind auch Ausführungsformen ohne Chip möglich, z.B. in optischen Analyseeinrichtungen.

In dem Trägerkörper 1 ist eine erste Aussparung 4 ausgebildet. Die erste Aussparung 4 ist zu einer Vorderseite 10 des Trägerkörpers 1 hin offen. Sie weist die Form eines Kanals auf und dient als Durchflusskanal 4'. Flüssigkeiten oder Gase können den Durchflusskanal 4' durchströmen. In direkter Nachbarschaft zu der ersten Aussparung 4, an den Durchflusskanal angrenzend, ist eine zweite Aussparung 3 ausgebildet. Diese weist mit der ersten Aussparung 4, in einem Teilbereich 9 der ersten Aussparung 4, eine gemeinsame Grenzfläche aus. Die zweite Aussparung 3 ist, wie in Fig. 1 gezeigt, durchgängig von der Vorderseite 10 bis hin zur Rückseite 11 des Trägerkörpers 1 ausgebildet. Sie ist vollständig mit der Elastomermasse 2 gefüllt bzw. befüllt.

Auf der Vorderseite 10 des Trägerkörpers 1 ist flächig eine selbstlebende Folie 5 aufgebracht. Die Klebeschicht 6 der selbstlebenden Folie 5 sorgt für eine gute Haftung der Folie 5 auf dem Trägerkörper 1 und auf der Elastomermasse 2. Die Folie 5 mit ihrer Klebeschicht 6, in Verbindung mit dem Trägerkörper 1 und der Elastomermasse 2, dichtet den Durchflusskanal 4' luft- bzw. gasdicht und/oder flüssigkeitsdicht gegenüber der Umwelt ab.

Um das erfindungsgemäße Ventil in biochemischen Vorrichtungen verwenden zu können, müssen die Materialien, welche mit den Flüssigkeiten oder Gasen in Kontakt kommen, mit den zu untersuchenden Substanzen kompatibel sein. In biochemischen Untersuchungen verwendete Flüssigkeiten sind zum Beispiel Blut, Urin, Wasser, Alkohole oder andere Lösungsmittel. Substanzen, welche zum Beispiel durch biochemische Vorrichtungen analysiert oder nachgewiesen werden sollen, sind zum Beispiel Proteine, DNA oder Antikörper. Diese dürfen durch die verwendeten Materialien nicht beeinflusst beziehungsweise verändert werden.

Mögliche zu verwendende Materialien für den Trägerkörper 1 sind harte Polymere, welche aus Gründen der einfachen Herstellung spritzgusstechnisch verarbeitbar sein sollten. Das Material sollte plastisch, d.h. schwer bis nicht verformbar sein. Solche Stoffe sind z.B. durch Polycarbonat oder Polypropylen gegeben. In einer vorgefertigten Form würde der Trägerkörper 1 einer Chip-Karte mit seiner ersten 4 und zweiten Aussparung 3 in einem Arbeitsschritt durch Spritzgusstechnik hergestellt. In die zweite Aussparung würde in einem zweiten Arbeitsschritt durch Spritzgusstechnik die Elastomermasse 2 eingebracht. Als mögliche Materialien für die Elastomermasse 2 eignen sich besonders thermoplastische Elastomere. Ein Beispiel für ein besonders gut geeignetes thermoplastisches Elastomer ist ein Gemisch aus Polypropylen und Ethylen-Propylen-Dien-M-Klass-Elastomer, welches unter dem Markennamen Santoprene® bekannt ist.

Ein Chip mit einem Sensor-Array kann in den Trägerkörper 1 von der Rückseite 11 her eingesetzt werden, welcher über eine Ausleseeinheit 7 von der Rückseite her kontaktiert und ausgelesen werden kann. Die Vorderseite des Trägerkörper 1, auf welcher die Durchflusskanäle 4' und Reaktionskammern angeordnet sind, kann mit Hilfe einer selbstlebenden Folie vollständig steril abgedeckt werden. Dadurch ergeben sich gas- und flüssigkeitsdichte Durchflusskanäle 4' und Reaktionskammer. Ein mögliches Material für eine Folie ist Polyethylen. Es sind aber auch andere Folienmaterialien verwendbar.

In Fig. 2 ist eine erfindungsgemäße Vorrichtung zum Steuern von Fluidströmen in Lab-on-a-Chip-Systemen in einer Aufsicht und in einer Schnittdarstellung entlang der Schnittlinie A-A' und entlang der Schnittlinie B-B' mit einer Einrichtung zum Steuern der Ventile dargestellt. Der Träger- bzw. Substrat-Körper 1 mit den Ventilen ist sandwichartig in einer Ausleseeinheit 7 befestigt. Teile der Ausleseeinheit 7 sind gegen die Vorderseite 10 und gegen die Rückseite 11 des Körpers 1 gepresst. Dadurch ist der Körper 1 unbeweglich in der Ausleseeinheit 7 gelagert. Ist der Körper 1 in Form einer Chip-Karte mit elektrischem Chip ausgestaltet, so kann die Ausleseeinheit 7 Signale des Sensor-Arrays auslesen und verarbeiten. Zur Steuerung von fluidischen Prozessen und chemischen Reaktionen in der ersten Aussparung 4 des Körpers 1 kann ein Ventil durch die Ausleseeinheit 7 betätigt werden.

Wie in Fig. 2 im Schnitt B-B' gezeigt, sind im Träger- bzw. Substrat-Körper 1 zwei Ventile angeordnet, welche beispielhaft für die Funktionsweise der Ventile dargestellt sind. Stempel 8 können Ventile in einen geöffneten (rechtes Ventil I) oder einen geschlossenen (linkes Ventil II) Zustand versetzen. Eine erste Aussparung 4 bzw. ein Durchflusskanal 4' kann durch Betätigen eines Ventile flüssigkeitsdicht und/oder gasdicht abgeschlossen werden. Ein Stempel 8, welcher in der Ausleseeinheit 7 angeordnet ist und von dieser gesteuert wird, übt eine Druckkraft von der Rückseite 11 her auf die Elastomermasse 2 aus. Dies erfolgt durch eine Bewegung des Stempels 8 in Richtung der Elastomermasse 2. Die Druckkraft, welche durch den Stempel 8 auf die Elastomermasse 2 ausgeübt wird, bewirkt eine Verformung des Elastomers. Da sich das Elastomer nur in Richtung der ersten Aussparung 4 ausdehnen kann, wird dieses in die erste Aussparung 4 gedrückt. Dies erfolgt so lange, bis die erste Aussparung 4 entlang einem Querschnitt der ersten Aussparung 4 vollständig mit Elastomer gefüllt ist. Dies wiederum bewirkt, dass das Ventil verschlossen ist.

Wird der Stempel 8 relativ zur Elastomermasse 2 weg bewegt, so wirkt auf das Elastomer weniger bis hin zu keiner Druckkraft, wodurch das Elastomer in seine Ursprungsform zurückkehrt. Das Elastomer zieht sich aus der ersten Aussparung zurück und gibt diese somit frei. Das Ventil ist wieder geöffnet.

Zum gleichzeitigen Betätigen der Ventile sind die Stempel 8 auf einer festen Platte der Ausleseeinheit 7a fixiert. Die feste Platte 7a befindet sich auf der Rückseite 11 des Plastik-Körpers 1. Die Stempel 8 sind über eine nicht dargestellte Feder auf geöffnet der Ventile vorgespannt, so dass sie keinen Druck in diesem Zustand auf die Ventile ausüben. Eine ebene Platte mit Erhöhungen 12 ist hinter der festen Platte der Ausleseeinheit 7a beweglich angeordnet. Hinter der festen Platte 7a bezeichnet die Seite der festen Platte 7a, welche sich auf der anderen Seite als der Körper 1 befindet. Befindet sich eine Erhöhung der beweglichen, ebenen Platte 12 unmittelbar hinter, d.h. in Kontakt mit einem Stempel 8, so wird dieser in Richtung der Elastomermasse 2 des zugehörigen Ventils gedrückt und das Ventil ist geschlossen. Befindet sich keine Erhöhung der beweglichen, ebenen Platte 12 hinter einem Stempel 8, so wird der Stempel durch die Feder in Richtung der beweglichen, ebenen Platte 12 gedrückt bzw. vorgespannt und übt keinen Druck auf das Elastomer 2 aus. Das zum Stempel 8 zugeordnete Ventil ist geöffnet.

Die bewegliche, ebene Platte mit Erhöhungen 12 in Verbindung mit der Ausleseeinheit 7, speziell der festen Platte der Ausleseeinheit 7a mit Stempeln 8, ergibt die Einrichtung zum Betätigen bzw. Steuern der Ventile 13. Die bewegliche, ebene Platte mit Erhöhungen 12 und die festen Platte der Ausleseeinheit 7a sowie die Stempel 8 sind in der Regel aus Stabilitätsgründen aus einem Metall, wie z.B. Stahl. Es sind aber auch andere, feste Materialien wie Hartplastik verwendbar. Federn sind in der Regel aus Federstahl.

Ein gleichzeitiges Betätigen oder nicht Betätigen aller Ventile des Arrays aus Ventilen entsprechend einem vorbestimmten Programms erfolgt über die Einrichtung zum Betätigen der Ventile 13 und insbesondere über die im Wesentlichen ebene Platte 12. Bei Bewegung der beweglichen, ebenen Platte mit Erhöhungen 12 relativ zur festen Platte 7a der Ausleseeinheit und damit dem plastischen Körper 1 mit den Ventilen, werden entsprechend der Anordnung der Erhöhungen auf der Platte 12 Ventile betätigt, unter welche bei der Bewegung eine Erhöhung geschoben wird. Wird ein Bereich der Platte 12 ohne Erhöhung unter ein Ventil geschoben, so bleibt das Ventil geöffnet. Wird durch die Bewegung eine sich unter einem Ventil befindliche Erhöhung unter dem Ventil weg verschoben und ein Bereich der Platte 12 stattdessen unter das Ventil geschoben, so wird das Ventil geöffnet.

Durch die Anordnung der Ventile in Zeilen Zₙ und Spalten Sₘ und der Erhöhungen in Zeilen Z_{n'} und Spalten S_{m'}, wobei der Abstand der Spalten der Erhöhungen gleich dem Abstand der Spalten des Ventil-Arrays ist, und durch eine Bewegung der Platte 12 entlang einer Richtung, welche parallel einer Spalte ist, werden alle Ventile gleichzeitig nach einem festen Programm betätigt. Da in jeder Spalte Sₘ nur ein Ventil angeordnet ist, betätig eine Erhöhung nur einmalig ein Ventil. Bei fester, vorgegebener Anordnung der Ventile, wird das Programm durch die Anordnung der Erhöhungen bestimmt. Ein Programmschritt wird durch Z_{n'}=Zₙ Spalten bestimmt. Bei einer Bewegung der Platte 12 um den Abstand einer Zeile wird der nächste Programmschritt entsprechend der Anordnung der Erhöhungen in der nächsten Zeile ausgeführt. Soll ein Ventil zwischen zwei Programmschritten geschlossen bleiben, so muss eine Erhöhung durchgängig entlang einer Spalte S_{n'} zwischen zwei Zeilen ausgebildet sein.

Bei gleichmäßiger Bewegung der Platte 12 wird die Dauer eines Programmschrittes bei vorgegebener, konstanter Vorschubgeschwindigkeit der Platte 12 relativ zur Platte 7a, durch den Abstand der Zeilen der Erhöhungen Z_{n'} bei festem, vorgegebnen Abstand der Zeilen der Ventile Zₙ bestimmt. Alternativ kann aber auch bei vorgegebenen Abständen der Zeilen der Erhöhungen Z_{n'} die Vorschubgeschwindigkeit variiert werden, entsprechend der gewünschten Dauer eines Programmschrittes.

Wie in Fig. 2 in der Aufsicht dargestellt ist, sind die Ventile nur an bestimmten Punkten des Arrays von Ventilen angeordnet. Jede Spalte Sₘ weist nur ein Ventil auf. Entsprechend den durchzuführenden chemischen Reaktionen und der gewünschten Mikrofluidik sind entsprechend viele Ventile in einer Zeile Zₙ angeordnet. Die Durchflusskanäle und Reaktionskammern, wobei letztere der Einfachheit halber nicht dargestellt sind, werden entsprechend der Anordnung der Ventile als Ausnehmungen in der Vorderseite 10 des Plastik-Körpers 1 ausgebildet. Komplexe chemische bzw. biochemische Reaktionen sind mit dem zuvor beschriebenen Verfahren so einfach zu steuern. Das Programm, welches die Fluidströme steuert über die Steuerung der Ventile, wird durch die Anordnung der Erhöhungen auf der Platte 12 bestimmt. Der Einfachheit halber sind die Ventile in Fig. 2 mit gleichen Abständen voneinander in den Spalten Sₙ und Zeilen Zₘ im Körper 1 angeordnet. Die Ventile werden durch die Bewegung der Platte 12 alle gleichzeitig gesteuert, d.h. betätigt bzw. nicht betätigt.

Andere Ausführungsformen, welche nicht in den Figuren dargestellt sind, mit z.B. unterschiedlichen Abständen der Ventile voneinander in den Spalten Sₙ und Zeilen Zₘ im Träger- bzw. Substrat-Körper 1 aus Plastikmaterial sind ebenfalls ausführbar. Eine Steuerung der Stempel 8 über die Platte 12 kann auch über Vertiefungen statt Erhöhungen in der Platte 12 erfolgen. Dann entspricht eine Vertiefung einem Öffnen eines Ventils. Es ist auch denkbar, dass die Stempel 8 nicht vorgespannt sind, um keinen Druck auf ein Ventil auszuüben, sondern im vorgespannten Zustand auf den Körper 1 drücken oder gar nicht vorgespannt sind. Ein Unterdruck kann dann an einer Bewegung der Stempel 8 über die Platte 12 beteiligt sein.

## Patentansprüche

1. Vorrichtung zum Steuern von Fluidströmen in Lab-on-a-Chip-Systemen,
mit einem Array von Ventilen, welche in n Spalten Sₙ und m Zeilen Zₘ angeordnet sind und jeweils ausgelegt sind, einen Fluidstrom in einem zugehörigen Durchflusskanal (4) zu steuern, wobei n und m ganze Zahlen sind,
und mit einer Einrichtung (13) zum Betätigen der Ventile,
wobei das Array mindestens zwei Ventile umfasst,
wobei jede Spalte Sₙ höchstens ein Ventil aufweist und jede Zeile Zₘ zwischen Null und n Ventilen aufweist,
**dadurch gekennzeichnet,**
**dass** die Vorrichtung einen flachen Trägerkörper (1) aus einem Plastikmaterial in Form einer Chip-Karte aufweist,
wobei auf einer Vorderseite (10) des Trägerkörpers (1) Durchflusskanäle (4) und Reaktionskammern angeordnet sind, die mit Hilfe einer Folie (5) abgedeckt sind,
wobei ein Chip mit einem Sensor-Array zum Nachweis biochemischer Substanzen von einer Rückseite (11) des Trägerkörpers (1) her einsetzbar oder eingesetzt ist,
wobei der Sensor-Array über eine Ausleseeinheit (7) von der Rückseite (11) des Trägerkörpers (1) her kontaktierbar und auslesbar ist, und
wobei der Trägerkörper (1) mit den Ventilen sandwichartig in der Ausleseeinheit (7) befestigt bzw. aufgenommen oder aufnehmbar ist, wobei Teile der Ausleseeinheit (7) gegen die Vorderseite (10) und gegen die Rückseite (11) des Trägerkörpers (1) gepresst sind, sodass der Trägerkörper (1) unbeweglich in der Ausleseeinheit (7) gelagert ist.

2. Vorrichtung nach Anspruch 1, **dadurch gekennzeichnet, dass** die Einrichtung (13) zum Betätigen der Ventile eine im Wesentlichen ebene Platte (12) aufweist mit aus der Ebene herausragenden Erhöhungen, welche in n' Spalten S_{n'} und m' Zeilen Z_{m'} angeordnet sind, wobei die Abstände benachbarter Spalten S_{n'} gleich den Abständen zugeordneter benachbarter Spalten Sₙ der Ventile sind,

3. Vorrichtung nach Anspruch 2, **dadurch gekennzeichnet, dass** die im Wesentlichen ebene Platte (12) in einer ersten Richtung gegenüber dem Array von Ventilen bewegbar gelagert ist, wobei die erste Richtung parallel zu den Spalten Sₙ des Arrays von Ventilen verläuft.

4. Vorrichtung nach Anspruch 3, **dadurch gekennzeichnet, dass** die aus der Ebene der Platte (12) herausragenden Erhöhungen derart in n' Spalten S_{n'} und m' Zeilen Z_{m'} angeordnet sind, dass bei einer Bewegung der im Wesentlichen ebene Platte (12) entlang der ersten Richtung gegenüber dem Array von Ventilen nach einem vorgegebenen Programm gesteuert einzelne Ventile geschlossen und andere Ventile geöffnet sind.

5. Vorrichtung nach einem der vorhergehenden Ansprüche, **dadurch gekennzeichnet, dass** die Folie (5) selbstklebend ausgebildet ist, wobei die Chip-Karte in Kreditkartenform ausgebildet ist, und wobei die Ventile eine Elastomermasse (2) enthalten, die zumindest teilweise benachbart zu einem jeweils zugeordneten Durchflusskanal (4) angeordnet ist.

6. Vorrichtung nach einem der voranstehenden Ansprüche, **dadurch gekennzeichnet, dass** der Körper (1) aus Polycarbonat oder Polypropylen besteht und/oder das Elastomer (2) ein thermoplastisches Elastomer, insbesondere Gummi oder ein Gemisch aus Polypropylen und Ethylen-Propylen-Dien-M-Klass-Elastomer ist.

7. Vorrichtung nach einem der voranstehenden Ansprüche, **dadurch gekennzeichnet, dass** die Chip-Karte sandwichartig in der Einrichtung (13) zum Betätigen der Ventile angeordnet ist, und auf der Rückseite (11) der Chip-Karte zu jedem Ventil jeweils in einer Einrichtungsplatte (7a) ein Stempel (8) zum Betätigen des jeweiligen Ventils angeordnet ist, wobei der Stempel (8) über wenigstens eine Feder zwischen der Einrichtungsplatte (7a) und dem Stempel (8) so vorgespannt ist, dass im Wesentlichen keine Druckkraft zwischen Stempel (8) und Ventil besteht.

## Claims

1. Device for controlling fluid flows in lab-on-a-chip systems,
with an array of valves which are arranged in n columns Sₙ and m rows Zₘ and which are each configured to control a fluid flow in an associated flow channel (4), n and m being integers,
and with an instrument (13) for actuating the valves,
wherein the array comprises at least two valves,
wherein each column Sₙ has at most one valve and each row Zₘ having between zero and n valves,
**characterized in**
**that** the device comprises a flat body (1) made of plastic material in form of a chipcard,
wherein flow channels (4) and reaction chambers are arranged on a front side (10) of the flat body (1), that are covered by a foil (5),
wherein a chip with a sensor-array for the detection of biochemical substances is insertable or inserted from a rear side (11) of the body (1),
wherein the sensor array is contactable and readable by a reader unit (7) from the rear side (11), and
wherein the body (1) with the valves is fastened in a sandwich fashion in the reader unit (7), wherein parts of the reader unit (7) are pressed against the front side (10) and against the rear side (11) so that the body (1) is mounted immobile in the reader unit (7).

2. Device as claimed in claim 1, **characterized in that** the instrument (13) for actuating the valves comprises an essentially plane plate (12) having elevations projecting from the plane, in which n' columns S_{n'} and m' rows Z_{m'} are arranged, the spacings of neighboring columns S_{n'} being equal to the spacings of associated neighboring columns Sₙ of the valves.

3. Device as claimed in claim 2, **characterized in that** the essentially plane plate (12) is mounted movably in a first direction relative to the array of valves, the first direction extending parallel to the columns Sₙ of the array of valves.

4. Device as claimed in claim 3, **characterized in that** the elevations projecting from the plane of the plate (12) are arranged in n' columns S_{n'} and m' rows Z_{m'} so that individual valves are closed and other valves are opened in a controlled way according to a predetermined program during a movement of the essentially plane plate (12) along the first direction relative to the array of valves.

5. Device as claimed in one of the preceding claims, **characterized in that** the film (5) is a self-adhesive film and the valves contain an elastomer compound (2) which is arranged at least partially next to a respectively associated flow channel (4).

6. Device as claimed in one of the preceding claims, **characterized in that** the body (1) consists of polycarbonate or polypropylene and/or the elastomer (2) is a thermoplastic elastomer, in particular rubber or a mixture of polypropylene and ethylene propylene diene M-class elastomer.

7. Device as claimed in one of the preceding claims, **characterized in that** the chip card is arranged in a sandwich fashion in the instrument (13) for actuating the valves, and for each valve a plunger (8) for actuating the respective valve is respectively arranged on the rear side (11) of the chip card in an instrument plate (7a), the plunger (8) being prestressed by means of at least one spring between the instrument plate (7a) and the plunger (8) so that essentially no pressure force exists between the plunger (8) and the valve.

## Revendications

1. Dispositif servant à commander des flux de fluide dans des systèmes de laboratoire sur puce,
avec un réseau de soupapes, qui sont disposées dans n colonnes Sₙ et m lignes Zₘ et qui sont respectivement configurées pour commander un flux de fluide dans un canal de passage (4) associé, dans lequel n et m sont des nombres entiers,
et avec un équipement (13) servant à actionner les soupapes,
dans lequel le réseau comprend au moins deux soupapes,
dans lequel chaque colonne Sₙ présente au maximum une soupape et chaque ligne Zₘ présente entre zéro et n soupapes,
**caractérisé en ce**
**que** le dispositif présente un corps de support (1) plat composé d'un matériau en plastique sous la forme d'une carte à puce,
dans lequel sont disposés, sur un côté avant (10) du corps de support (1), des canaux de passage (4) et des chambres de réaction, qui sont recouverts à l'aide d'un film (5),
dans lequel une puce peut être insérée ou est insérée, avec un réseau de capteurs servant à démontrer la présence de substances biochimiques, depuis un côté arrière (11) du corps de support (1),
dans lequel le réseau de capteurs peut être mis en contact et être lu par l'intermédiaire d'une unité de lecture (7) depuis le côté arrière (11) du corps de support (1), et
dans lequel le corps de support (1) avec les soupapes est fixé ou logé ou peut être logé à la manière d'un sandwich dans l'unité de lecture (7), dans lequel des parties de l'unité de lecture (7) sont pressées contre le côté avant (10) et contre le côté arrière (11) du corps de support (1) de sorte que le corps de support (1) est monté de manière immobile dans l'unité de lecture (7).

2. Dispositif selon la revendication 1, **caractérisé en ce que** l'équipement (13) servant à actionner les soupapes présente une plaque (12) sensiblement plane avec des parties surélevées dépassant du plan, lesquelles sont disposées dans n' colonnes S_{n'} et m' lignes Z_{m'}, dans lequel les espacements de colonnes S_{n'} adjacentes sont identiques aux espacements de colonnes Sₙ adjacentes associées des soupapes.

3. Dispositif selon la revendication 2, **caractérisé en ce que** la plaque (12) sensiblement plane est montée de manière à pouvoir être déplacée dans une première direction par rapport au réseau de soupapes, dans lequel la première direction s'étend de manière parallèle par rapport aux colonnes Sₙ du réseau de soupapes.

4. Dispositif selon la revendication 3, **caractérisé en ce que** les parties surélevées dépassant du plan de la plaque (12) sont disposées de telle manière dans n' colonnes S_{n'} et m' lignes Z_{m'} que lors d'un déplacement de la plaque (12) sensiblement plane le long de la première direction par rapport au réseau de soupapes par une commande selon un programme prédéfini, individuelles soupapes sont fermées et d'autres soupapes sont ouvertes.

5. Dispositif selon l'une quelconque des revendications précédentes, **caractérisé en ce que** le film (5) est réalisé de manière autocollante, dans lequel la carte à puce est réalisée sous la forme d'une carte de crédit, et dans lequel les soupapes contiennent une masse élastomère (2), qui est disposée au moins en partie de manière adjacente par rapport à un canal de passage (4) respectivement associé.

6. Dispositif selon l'une quelconque des revendications précédentes, **caractérisé en ce que** le corps (1) est constitué de polycarbonate ou de polypropylène, et/ou l'élastomère (2) est un élastomère thermoplastique, en particulier du caoutchouc, ou un mélange composé de polypropylène et d'un élastomère classe M d'éthylène-propylène-diène.

7. Dispositif selon l'une quelconque des revendications précédentes, **caractérisé en ce que** la carte à puce est disposée à la manière d'un sandwich dans l'équipement (13) servant à actionner les soupapes, et un poinçon (8) servant à actionner la soupape respective est disposé sur le côté arrière (11) de la carte à puce par rapport à chaque soupape respectivement dans une plaque d'équipement (7a), dans lequel le poinçon (8) est précontraint par l'intermédiaire d'au moins un ressort entre la plaque d'équipement (7a) et le poinçon (8) de telle sorte qu'aucune force de pression n'est sensiblement présente entre le poinçon (8) et la soupape.
